# EUROPÄISCHE PATENTSCHRIFT

(11) **EP 3 046 816 B1**
(45) Veröffentlichungstag und Bekanntmachung des Hinweises auf die Patenterteilung: **17.06.2020**
(21) Anmeldenummer: 14761984.5
(22) Anmeldetag: 05.09.2014
(51) Int. Cl.: B60T 8/88, G01P 3/44, G08C 19/16, G08C 25/00

(54) **VERFAHREN ZUM ÜBERWACHEN EINER ÜBERTRAGUNGSSTRECKE**
METHOD FOR MONITORING A TRANSMISSION LINK
PROCÉDÉ DE SURVEILLANCE D'UNE VOIE DE TRANSMISSION

(30) Priorität: 20.09.2013 DE 102013015575
(43) Veröffentlichungstag der Anmeldung: 27.07.2016
(73) Patentinhaber: Continental Teves AG & Co. OHG, 60488 Frankfurt am Main (DE); NXP B.V., 5656 AG Eindhoven (NL)
(72) Erfinder: ENDRES, Ralf, 64521 Groß-Gerau (DE); ZACHOW, Jochen, 61479 Glashütten (DE); KANNENGIESSER, Andreas, 21244 Buchholz (DE); KOCK, Jörg, 25348 Horst (DE); MEYER, Robert, 22529 Hamburg (DE)
(86) Internationale Anmeldenummer: PCT/EP2014/068981
(87) Internationale Veröffentlichungsnummer: WO 2015/039895

(56) Entgegenhaltungen:
- WO-A1-2005/038489
- DE-A1-102010 064 205
- US-A1- 2010 090 809

## Beschreibung

Die Erfindung betrifft ein Verfahren zum Überwachen einer Übertragungsstrecke zwischen einem Sensor und einer Auswerteeinrichtung, eine Steuervorrichtung zur Durchführung des Verfahrens und einen Sensor mit der Steuervorrichtung.

Aus den Dokumenten US 2010/090809 A1 und DE 10 2011 080 789 A1 ist jeweils ein Fahrzeug bekannt, in dem Raddrehzahlsensoren zur Erfassung der Raddrehzahl der einzelnen Räder verbaut sind. Diese Raddrehzahlsensoren sind aktive Raddrehzahlsensoren und übertragen ihre Messdaten in Form von Raddrehzahlen über ein Kabel als Übertragungsstrecke an eine Auswerteeinrichtung.

Es ist Aufgabe der Erfindung, die Übertragung der Messdaten zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Senden eines Messwertes in einem Datenübertragungssignal die Schritte Eintragen des Messwertes in das Datenübertragungssignal, Eintragen einer Fehlerinformation in das Datenübertragungssignal nach dem Messwert, aus der hervorgeht, ob der Messwert einen Fehler aufweist und Eintragen einer die Fehlerinformation beschreibenden Bewertungsinformation in das Datenübertragungssignal nach der Fehlerinformation, wenn der Messwert den Fehler aufweist.

Dem angegebenen Verfahren liegt die Überlegung zugrunde, dass zur Einhaltung hoher Sicherheitsstandards fehlerhafte Messwerte erkannt und entsprechend bei der Verarbeitung berücksichtigt werden müssen. Die Erkennung der fehlerhaften Messwerte könnte in der Einrichtung geschehen, die die Messwerte verarbeitet. Hier stellt sich jedoch das Problem, dass der Erkennung teils rechenintensive Algorithmen zugrungeliegen, deren Ablauf einer gewissen Zeit bedarf.

Aus diesem Grund wäre es wünschenswert, den die Messwerte erfassenden Sensor in die Erkennung der fehlerhaften Messwerte mit einzubinden. Hierzu müsste der Sensor jedoch die Information über den Fehler in einem Messwert zusätzlich zum fehlerhaften Messwert selbst übertragen, damit diese Information bei der Verarbeitung berücksichtigt werden kann. Je mehr Informationen der Sensor über den Fehler bereitstellt, desto schneller kann dabei bei der Verarbeitung darauf reagiert werden, was insbesondere bei Anwendungen in einem Fahrzeug die Sicherheit deutlich erhöhen kann.

Der Absicht, einen Hinweis auf den Fehler und möglichst viele Informationen über den Fehler zu übertragen, stehen jedoch in vielen Sensoren die technischen Rahmenbedingungen gegenüber, dass Messwerte in periodischen Abständen übertragen werden und so vergleichsweise wenig Bandbreite zur Übertragung der Informationen zur Verfügung steht. Die Situation verschärft sich, wenn sich diese periodischen Abstände zwischen den Messwerten situationsabhängig ändern und die Bandbreite nur in bestimmten Situationen nicht mehr ausreicht, um den Hinweis auf den Fehler und die Information über den Fehler zu übertragen.

Hier setzt das angegebene Verfahren an, im Rahmen dessen der Messwert, der Hinweis auf den Fehler und die Information über den Fehler in einer zeitlich aufsteigenden Reihenfolge zur weiteren Verarbeitung übertragen werden sollte. Sollte die Bandbreite sinken und nicht mehr genug Zeit zwischen zwei Messwerten zur Verfügung stehen um alle Informationen zu übertragen, wird zuerst die Information über den Fehler abgeschnitten. Diese erlaubt es zwar nicht mehr, den Fehler zu qualifizieren, die Information, dass ein Fehler vorliegt steht aber immer noch zur Verfügung, worauf entsprechend reagiert werden kann. Auf diese Weise lassen sich Fehler in den übertragenen Messdaten bei der Verarbeitung besser und zuverlässiger erkennen, selbst wenn nicht alle Informationen über den Fehler aus Platz- und Zeitgründen übertragen werden können.

In einer Weiterbildung des angegebenen Verfahrens wird der Messwert als Puls aus einem aktiven Drehzahlsensor in das Datenübertragungssignal eingetragen. In aktiven Drehzahlsensoren werden Raddrehzahlinformationen bekanntermaßen als Pulse ausgegebenen, aus deren Anzahl über einen bestimmten Zeitraum sich die Drehzahl ableiten lässt. Hier stellt sich jedoch grundsätzlich das Problem, dass die Pulse bei höheren Drehzahlen über den bestimmten Zeitraum immer mehr werden, so dass der Abstand zwischen zwei Pulsen zum Übertragen der oben genannten Information, ob ein Fehler vorliegt und wie dieser Fehler aussieht, gerade in jenen Drehzahlbereichen zu klein ist, in denen eine hohe Robustheit gegenüber Fehlern notwendig ist. Als Beispiel sei hier eine Fahrdynamikregelung für ein Fahrzeug genannt, die insbesondere in hohen Drehzahlbereichen der Räder zuverlässig reagieren muss. Hier kann das Verfahren in besonders günstiger Weise die Fehlerbehandlung verbessern, denn wenn im Rahmen des angegebenen Verfahrens in hohen Drehzahlbereichen Fehler erkannt werden, die sich nicht qualifizieren lassen, dann könnte beispielsweise die Drehzahl in einen Bereich zurückgeführt werden, in dem sich der Fehler wieder qualifizieren lässt. Im Rahmen der Fahrdynamikregelung könnte beispielsweise das Fahrzeug auf eine bestimmte Geschwindigkeit abgebremst werden.

In einer anderen Weiterbildung des angegebenen Verfahrens umfasst die Bewertungsinformation einen Fehlerqualifizierungsbereich und einen Fehlerquantifizierungsbereich. Im Fehlerqualifizierungsbereich könnte dabei angegeben werden, um was für einen Fehler es sich handelt, während im Fehlerquantifizierungsbereich beispielsweise eine Information zur Fehlerursache übertragen werden könnte, so dass der Fehler bei der Verarbeitung besser bewertet und so entsprechend berücksichtigt oder verworfen werden kann.

In einer besonderen Weiterbildung des angegebenen Verfahrens wird der Fehlerqualifizierungsbereich dabei vor dem Fehlerquantifizierungsbereich angeordnet, so dass im Falle der oben genannten abnehmenden Bandbreite zur Übertragung der Informationen über den Fehler immer erst klar ist, um welchen Fehler es sich handelt, bevor auch Hintergrundinformationen zu diesem Fehler übertragen werden.

In einer bevorzugten Weiterbildung des angegebenen Verfahrens umfasst der Fehlerqualifizierungsbereich wenigstens zwei Informationsabschnitte, von denen ein erster der Informationsabschnitte eine erste Fehlerart und der zweite der Informationsabschnitte eine zweite Fehlerart qualifizieren. Auf diese Weise könnte sich beim Empfang der übertragenen Informationen durch eine simple Abfrage der einzelnen Informationsabschnitte nach Art eines Ausschlussverfahrens zur Erkennung des Fehlers entlanggehangelt werden. Zeigt einer der Informationsabschnitte eine bestimmte Fehlerart an, so liegt diese Fehlerart vor. Unter einem Informationsabschnitt kann eine einzelne Informationseinheit, wie ein Bit oder ein Symbol als auch eine Gruppe mehrerer Informationseinheiten, wie beispielsweise ein Byte verstanden werden.

In einer besonders bevorzugten Weiterbildung des angegebenen Verfahrens ist eine Reihenfolge der beiden Informationsabschnitte von einer Fehlerauswirkung der beiden Fehlerarten abhängig. Auf diese Weise können in dem Fehlerqualifizierungsbereich zunächst die Fehler Informationsabschnitte übertragen werden, die Fehler mit einer hohen Fehlerauswirkung qualifizieren. Sollte der Platz zum Übertragen aller Informationsabschnitte nicht ausreichen, um alle Informationsabschnitte zu übertragen, so würden zumindest die Informationsabschnitte übertragen, die auf einen Fehler mit einer hohen Fehlerauswirkung hindeuten.

In einer noch anderen Weiterbildung des angegebenen Verfahrens umfasst der Fehlerquantifizierungsbereich Informationen zu einer Fehlerursache des Fehlers, so dass sich bei der Bewertung des Fehlers beispielsweise auch Zustandsinformationen berücksichtigten lassen, die beispielsweise auf einen anstehenden Fehler mit einer höheren Fehlerauswirkung, wie einen Ausfall des Sensors hindeuten. Entsprechend könnten Warnhinweise, wie eine Aufforderung mit dem oben genannten Fahrzeug zur Wartung zu fahren, ausgegeben werden.

In einer zusätzlichen Weiterbildung des angegebenen Verfahrens wird, wenn der Messwert keinen Fehler aufweist, in das Datenübertragungssignal nach der Fehlerinformation eine Zusatzinformation eingetragen, die einen den Messwert erfassenden Sensor beschreibt. Auf diese Weise könnten auch im Normalbetrieb Zustandsinformationen zum Sensor gesammelt und bei der Auswertung der Messwerte bewertet werden.

Gemäß einem weiteren Aspekt der Erfindung ist eine Steuer-vorrichtung eingerichtet, eines der angegebenen Verfahren durchzuführen.

In einer Weiterbildung der angegebenen Steuervorrichtung weist die angegebene Vorrichtung einen Speicher und einen Prozessor auf. Dabei ist eines der angegebenen Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt kann ein Computerprogramm Programmcodemittel umfassen, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt kann ein Computerprogrammprodukt einen Programmcode enthalten, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst ein Sensor eine solche Steuervorrichtung.

In einer besonderen Weiterbildung ist der angegebene Sensor ein Raddrehzahlsensor.

Gemäß einem weiteren Aspekt kann ein Fahrzeug einen der angegebenen Raddrehzahlsensoren umfassen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine schematische Ansicht eines Fahrzeuges mit einer Fahrdynamikregelung,
Fig. 2 eine schematische Ansicht eines Raddrehzahlsensors in dem Fahrzeug der Fig. 1, und
Fig. 3 ein Diagramm mit einem Ausgangssignal aus dem Raddrehzahlsensor der Fig. 2 zeigen.

In den Figuren werden gleiche technische Elemente mit gleichen Bezugszeichen versehen und nur einmal beschrieben.

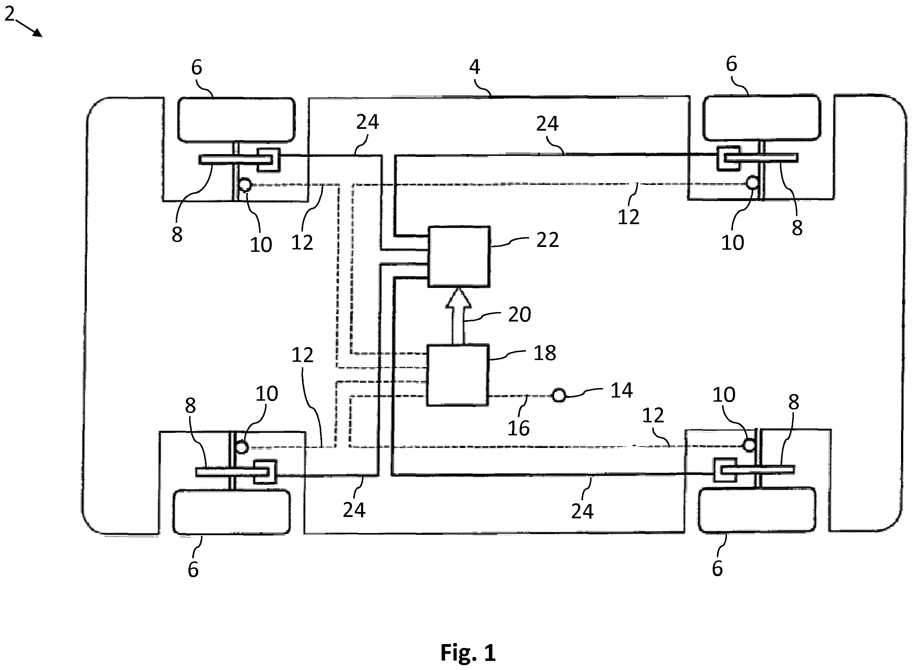

Es wird auf Fig. 1 Bezug genommen, die eine schematische Ansicht eines Fahrzeuges 2 mit einer an sich bekannten Fahrdynamikregelung zeigt. Details zu dieser Fahrdynamikregelung können beispielsweise der DE 10 2011 080 789 A1 entnommen werden.

Das Fahrzeug 2 umfasst ein Chassis 4 und vier Räder 6. Jedes Rad 6 kann über eine ortsfest am Chassis 4 befestigte Bremse 8 gegenüber dem Chassis 4 verlangsamt werden, um eine Bewegung des Fahrzeuges 2 auf einer nicht weiter dargestellten Straße zu verlangsamen.

Dabei kann es in einer dem Fachmann bekannten Weise passieren, dass die Räder 6 des Fahrzeuges 2 ihre Bodenhaftung verlieren und sich das Fahrzeug 2 sogar von einer, beispielsweise über ein nicht weiter gezeigtes Lenkrad vorgegebenen Trajektorie durch Untersteuern oder Übersteuern wegbewegt. Dies wird durch an sich bekannte Regelkreise wie ABS (Antiblockiersystem) und ESP (elektronisches Stabilitätsprogramm) vermieden.

In der vorliegenden Ausführung weist das Fahrzeug 2 dafür Drehzahlsensoren 10 an den Rädern 6 auf, die eine Drehzahl 12 der Räder 6 erfassen. Ferner weist das Fahrzeug 2 einen Inertialsensor 14 auf, der Fahrdynamikdaten 16 des Fahrzeuges 2 erfasst, die beispielsweise eine Nickrate, eine Wankrate, eine Gierrate, eine Querbeschleunigung, eine Längsbeschleunigung und/oder eine Vertikalbeschleunigung in einer dem Fachmann an sich bekannten Weise ausgegeben umfassen können.

Basierend auf den erfassten Drehzahlen 12 und Fahrdynamikdaten 16 kann eine Auswertevorrichtung in Form eines Reglers 18 in einer dem Fachmann bekannten Weise bestimmen, ob das Fahrzeug 2 auf der Fahrbahn rutscht oder sogar von der oben genannten vorgegebenen Trajektorie abweicht und entsprechend mit einem an sich bekannten Reglerausgangssignal 20 darauf reagieren. Das Reglerausgangssignal 20 kann dann von einer Stelleinrichtung 22 verwendet werden, um mittels Stellsignalen 24 Stellglieder, wie die Bremsen 8 anzusteuern, die auf das Rutschen und die Abweichung von der vorgegebenen Trajektorie in an sich bekannter Weise reagieren.

Anhand einer der in Fig. 1 gezeigten Drehzahlsensoren 10 soll die vorliegende Erfindung näher verdeutlicht werden, auch wenn die vorliegende Erfindung an beliebigen Sensoren, wie beispielsweise dem Inertialsensor 14 umsetzbar ist.

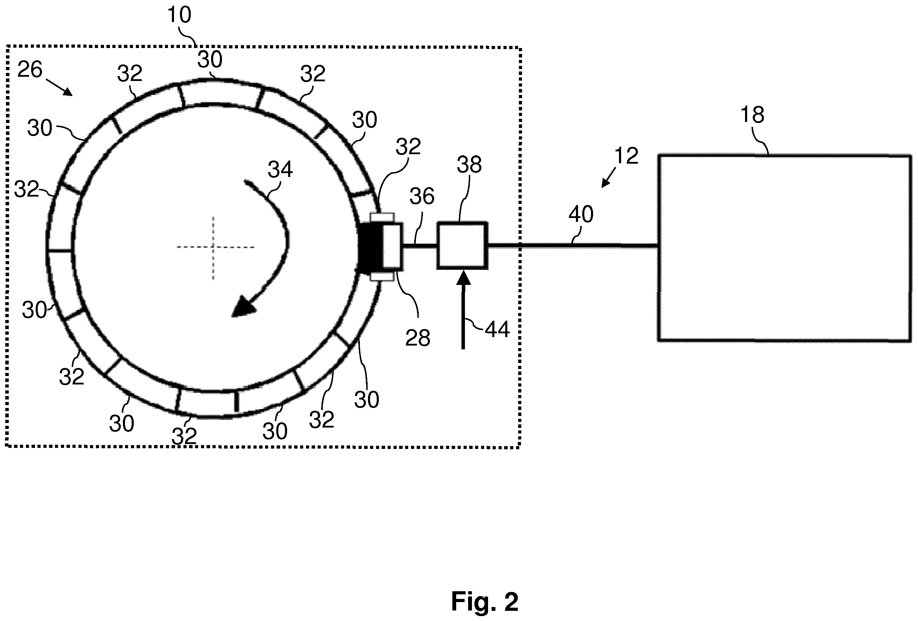

Es wird auf Fig. 2 Bezug genommen, die eine schematische Ansicht einer der Drehzahlsensoren 10 in der Fahrdynamikregelung der Fig. 1 zeigt.

Der Drehzahlsensor 10 ist in der vorliegenden Ausführung als aktiver Drehzahlsensor ausgeführt, der eine drehfest am Rad 6 befestigte Encodersscheibe 26 und einen ortsfest zum Chassis 4 befestigen Lesekopf 28 umfasst.

Die Encoderscheibe 26 besteht in der vorliegenden Ausführung aus aneinandergereihten Magnetnordpolen 30 und Magnetsüdpolen 32, die gemeinsam ein nicht weiter dargestelltes Gebermagnetfeld erregen. Dreht sich die am Rad 6 befestigte Encoderscheibe 26 mit diesem in eine Drehrichtung 34, dreht sich das Gebermagnetfeld so mit.

Der Lesekopf 28 ist in der vorliegenden Ausführung ein magnetostriktives Element, das in Abhängigkeit der Winkellage des vom Encoderrad 26 erregten Gebermagnetfeldes seinen elektrischen Widerstand ändert.

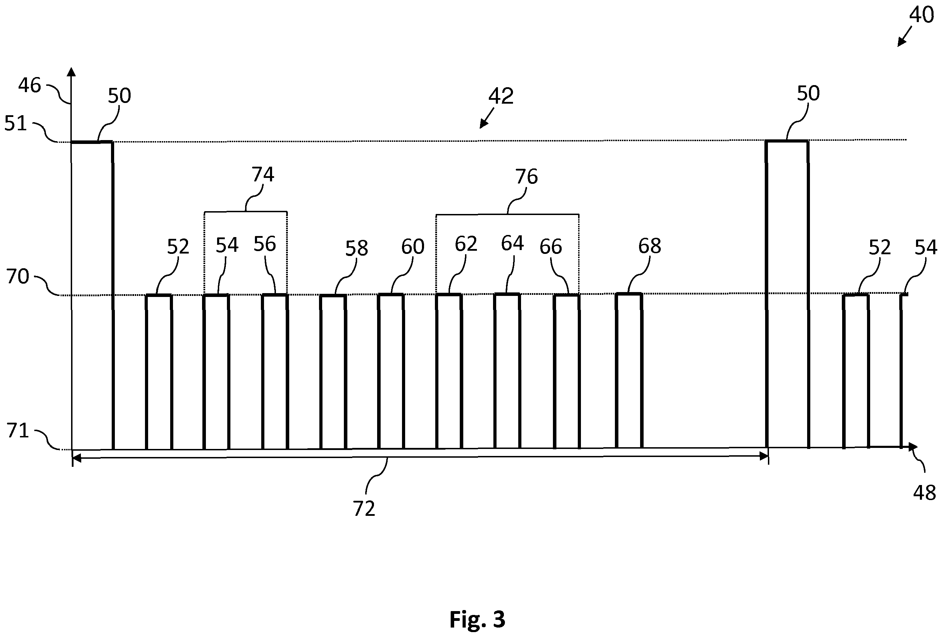

Zur Erfassung der Drehzahl 12 wird die Änderung der Winkellage des Encoderrades 26 und damit die Änderung des elektrischen Widerstandes des Lesekopfes 28 erfasst. Dazu kann der Lesekopf 28 in an sich bekannter Weise an eine nicht weiter dargestellte Widerstandsmessschaltung, wie beispielsweise eine an sich bekannte Brückenschaltung angeschlossen werden. In Abhängigkeit des elektrischen Widerstandes des Lesekopfes 28 wird in der Widerstandsmessschaltung ein periodisches Ausgangssignal, nachstehend Drehzahlgebersignal 36 genannt, erzeugt. Basierend auf dem Drehzahlgebersignal 36, kann in an sich bekannter Weise in einer dem Lesekopf 28 nachgelagerten Signalaufbereitungsschaltung 38, ein von der Drehzahl 12 abhängiges und in Fig. 3 gezeigtes Pulssignal 40 erzeugt und an den Regler 18 ausgegeben werden. Hierzu und zu weiteren Hintergrundinformationen zu aktiven Raddrehzahlsensoren wird auf den einschlägigen Stand der Technik, wie beispielsweise die DE 101 46 949 A1 verwiesen.

In der vorliegenden Ausführung wird in das Pulssignal 40 als Datenübertragungssignal neben den Informationen über die Drehzahl 12 auch eine in Fig. 3 gezeigte Fehlerinformation 42 eingetragen, aus der hervorgeht, ob ein bestimmter Messwert für die Drehzahl 12 einen Fehler aufweist, oder nicht. Diese Fehlerinformation 42 kann beispielsweise in der Signalaufbereitungsschaltung 38 aus einem Zustandssignal 44 abgeleitet und in das Pulssignal 40 einmoduliert werden. Das Zustandssignal 44 kann beispielsweise aus einer nicht weiter dargestellten Überwachungsschaltung ausgegeben werden, die den Fehlerzustand des Drehzahlsensors 10 überwacht.

Es wird auf Fig. 3 Bezug genommen, in der das Pulssignal 40 in Form von Stromwerten 46 über die Zeit 48 dargestellt ist.

Das Pulssignal 40 trägt die Informationen über die Drehzahl 12 als Geschwindigkeitspulse 50 mit einem ersten Pulslevel 51, der nachstehend High-Pulslevel 51 genannt wird. Diese Geschwindigkeitspulse 50 werden mit höchster Priorität übertragen, was heißt, dass bei der anstehenden Übertragung eines Geschwindigkeitspulses 50 die Übertragung aller anderen Informationen zurückgestellt oder abgebrochen wird.

Neben den Geschwindigkeitspulsen 50 wird in das Pulssignal 40 mindestens ein weiterer Informationspuls 52 bis 68 eingetragen, der abhängig von der zu übertragenden Information beispielsweise ein zweites Puls-Level 70, das nachstehend Medium-Pulslevel 70 genannt wird, oder ein drittes Pulslevel 71, das nachstehend Low-Pulslevel 71 genannt wird, aufweisen kann. In der Fig. 3 sind der Übersichtlichkeit halber alle Informationspulse 52 bis 68 mit dem Medium-Pulslevel 70 dargestellt. Der Informationspuls 52 bis 68 kann eine Fehlerinformation tragen, aus der hervorgeht, ob der dem Informationspuls 52 bis 68 vorgelagerte Geschwindigkeitspuls 50 einen Fehler aufweist, oder nicht. In der vorliegenden Ausführung werden in das Pulssignal 40 nach dem Geschwindigkeitspuls 50 neun Informationspulse 52 bis 68 eingetragen, die die zuvor genannte Fehlerinformation und weitere Informationen basierend auf dem an sich bekannten AK-Protokoll des Arbeitskreises der Automobilindustrie tragen. Jeder Informationspuls 52 bis 68 trägt dabei ein Bit #0 bis #8. Wird ein Informationspuls 52 bis 68 mit dem Medium-Pulslevel 70 übertragen, ist sein entsprechendes Bit #0 bis #8 auf 1 gesetzt. Wird ein Informationspuls 52 bis 68 mit dem Low-Pulslevel 71 übertragen, so ist sein entsprechendes Bit #0 bis #8 auf 0 gesetzt. Das AK-Protokoll wurde herkömmlich bereits zur Überwachung eines in Fig. 2 nicht weiter sichtbaren Luftspaltes zwischen dem Encoderrad 26 und dem Lesekopf 28 verwendet, wobei die einzelnen Informationspulse 52 bis 68 nachstehend in der folgenden Weise belegt wurden:

| Bit | Puls | Abkürzung | Beschreibung | Kodierung |
|---|---|---|---|---|
| #0 | 52 | LR | Luftspaltreserve | '0' = in Ordnung |
| | | | | '1' = schlecht |
| #1 | 54 | | | |
| #2 | 56 | | | |
| #3 | 58 | GDR | Gültigkeit der Drehrichtungsinfo | '0' = ungültig |
| | | | | '1' = gültig |
| #4 | 60 | DR | Drehrichtung | '0' = positiv |
| | | | | '1' = negativ |
| #5 | 62 | | | |
| #6 | 64 | | | |
| #7 | 66 | | | |
| #8 | 68 | P | Parität | |

Im Fahrzeug laufen in einem Steuergerät, das nachstehend beispielshaft als der Regler 18 angenommen wird, in der Signalkette eines Raddrehzahlsensorsystems die Raddrehzahlen 12 aller Raddrehzahlensensoren 10 des Fahrzeuges 2 zusammen und können neben dem Steuergerät 18 für eine Vielzahl von weiteren Fahrzeugsystemen aufbereitet und zur Verfügung gestellt werden. Da die Raddrehzahlen 12 durch die Weiterverwendung in Sicherheitssystemen wie beispielsweise oder dem gezeigten Elektronischen Stabilitäts-Programm (ESP) oder einem nicht weiter gezeigten Anti-Blockier-System (ABS) sicherheitsrelevant sind, müssen fehlerhafte Geschwindigkeitsinformationen, die auf eine Fehlfunktion des Raddrehzahlsensors 10 zurückzuführen sind, vom Steuergerät, wie dem Steuergerät 18 mit einer ausreichend hohen Wahrscheinlichkeit und innerhalb einer ausreichenden Zeit 48 erkannt werden.

Das obige AK-Protokoll hat jedoch den Nachteil, dass im Raddrehzahlsensor 10 auftretende Fehler nicht an das Steuergerät 18 gemeldet werden, so dass es dem Steuergerät 18 durch geeignete Plausibilisierungen obliegen würde eine eventuelle Fehlerhaftigkeit und damit die Gültigkeit der Raddrehzahl 12 zu bewerten. Das Steuergerät 18 soll im Falle eines anormalen Fahrzustandes in das Fahrzeug 2 mittels der Bremsen 8 eingreifen und in einen normalen Fahrzeugstand zurückführen. Die Schwierigkeit für das Steuergerät 18 liegt nun darin, eine ungültige Raddrehzahl 12, die ebenfalls als anormaler Fahrzustand interpretiert werden würde, von einer gültigen, den abnormalen Fahrzustand anzeigenden Raddrehzahl 12 zu unterscheiden. So kann beispielsweise die Anzeige einer zu geringen Raddrehzahl 12 durch einen internen Fehler im Raddrehzahlsensor 12 oder durch das reale Blockieren eines Rades 6 verursacht werden, wobei das Steuergerät 18 lediglich auf das reale Blockieren des Rades 6 durch Lösen der Bremse 8 reagieren sollte.

Werte für die Wahrscheinlichkeit einer Fehlererkennung für verschiedene Sicherheitsstufen sind in der ISO26262 definiert. Diese Sicherheitsstufen werden nachstehend ASIL-Grad genannt und hängen beispielsweise von einer Auswirkung eines Fehlers ab, den der Fehler auf das Fahrzeug hätte. Das Problem bei der Verwendung des oben genannten AK-Protokolls ist eine unzureichende Fehlererkennung auf einer Systemebene des Fahrzeuges 2 zur Erreichung vorgegebener ASIL-Grade.

Daher wird im Rahmen der vorliegenden Ausführung, eine von einer Eigendiagnosefunktionalität des Raddrehzahlsensors 10 festgestellte Fehlerinformation über das AK-Protokoll an das Steuergerät 18 übertragen. Die Eigendiagnosefunktionalität kann beispielsweise durch das oben genannte von der Überwachungseinrichtung bereitgestellte Zustandssignal 44 bereitgestellt werden, während die Fehlerinformation in wenigstens einem der Informationspulse 52 bis 68 übertragen werden kann. Auf diese Weise wird die Wahrscheinlichkeit gesteigert, dass das Steuergerät 18 einen Fehler erkennt, weil eine eindeutige Unterscheidung zwischen einem Fehler auf der Ebene des Raddrehzahlsensors 10 und einem anormalen Fahrzustand möglich ist. Auf diese Weise können durch das Gesamtsystem, im vorliegenden Fall durch die Fahrdynamikregelung, vorgegebene ASIL-Grade erreicht werden.

Für die Implementierung der Übertragung der Fehlerinformation über das AK-Protokoll wird im Bit #0 und damit im ersten Informationspuls 52 nicht mehr die *"Luftspaltreserve"* sondern in allgemeiner Form eine Fehlerinformation übertragen, aus der hervorgeht, ob der Geschwindigkeitspuls 50 einen Fehler aufweist, oder nicht. Wird von der internen Sensorüberwachung kein Fehler oder Auffälligkeit erkannt, wird das Bit #0="0" und damit der erste Informationspuls 52 auf das Low-Pulslevel 71 gesetzt und das AK-Protokoll wird gemäß der obigen Tabelle übertragen. Hier könnten die Bits #5, #6 und #7 und damit der sechste, siebte und achte Informationspuls 62, 64 und 66 den Wert der Luftspaltreserve repräsentieren. Im Fehlerfall des Sensorelements wird hingegen das Bit #1="1" und damit der erste Informationspuls 52 auf das Medium-Pulslevel 70 gesetzt. Die Bit-Folge aus den, in der obigen Tabelle noch unbelegten und damit frei definierbaren Bits #1, #2, #5, #6 und #7, also des zweiten, dritten, sechsten, siebten und achten Informationspulses 54, 56, 62, 64, 66 werden dann für eine eindeutige Aufschlüsselung einer allgemeinen Fehlerinformation in 2⁵=32 Fehlerursachen herangezogen.

Bei hohen Geschwindigkeiten des Fahrzeuges 2 werden allerdings nicht mehr alle 9 Bits und damit Informationspulse 52 bis 68 übertragen, da ein zeitlicher Abstand 72 zwischen zwei Geschwindigkeitspulsen 50 so klein wird, dass vor einer vollständigen Übertragung aller Informationspulse 52 bis 68 eines Datenpaketes des AK-Protokolls bereits wieder ein neuer Geschwindigkeitspuls 50 mit höherer Priorität ausgegeben werden muss. Beispielsweise ist die Übertragung des Bits #8, also des die Parität P tragenden letzten Informationspulses 68, und damit eine vollständige 5-Bit-Fehlerkodierung für Geschwindigkeiten von>150 km/h für das Fahrzeug 2 nicht mehr möglich.

Um diese geschwindigkeitsabhängigen Übertragungsmöglichkeiten zu berücksichtigen, wird im Rahmen der vorliegenden Ausführung vorgeschlagen, die am Raddrehzahlsensor 10 prinzipiell möglichen Fehler in Abhängigkeit ihrer durch den ASIL-Grad bestimmten Fehlerauswirkung zu übertragen.

Als ASIL-relevanter Top-Fehler wird ein Fehler bezeichnet, dessen Übertragung an das Steuergerät 18 im Gegensatz zu ASIL-relevanten Fehlern für jede Geschwindigkeit des Fahrzeuges 2 garantiert werden muss. Um eine zuverlässige Erkennung insbesondere von ASIL-relevanten Top-Fehlern seitens des Steuergeräts 18 auch bei hohen Geschwindigkeiten des Fahrzeuges 2 zu gewährleisten, werden die Fehler derart kodiert, dass anhand des Bit #1 und damit dem zweiten Informationspuls 54 erkannt werden kann, ob es sich um einen ASIL-relevanten Top-Fehler handelt oder nicht. Ein auf "1" gesetztes Bit #1 und damit ein zweiter Informationspuls 54 mit einem Medium-Pulslevel 70 wird allgemein als ASIL-relevanter Top-Fehler interpretiert.

Anhand Bit #2 und damit dem dritten Informationspuls 56 kann dann weiter der ASIL-relevante Top-Fehler in zwei unabhängige ASIL-relevante Top-Fehler #1 und Top-Fehler #2 klassifiziert werden. Als Beispiele für eine mögliche Klassifizierung ASIL-relevanter Top-Fehler könnte als Top-Fehler #1 *"Die ausgegebene Frequenz des Geschwindigkeitsignals ist höher als das x-fache des realen Werts"* und als Top-Fehler #2 *"Die ausgegebene Frequenz des Geschwindigkeitsignals ist niedriger als das y-fache des realen Werts"* definiert werden. Der Top-Fehler #1 könnte dann dem dritten Informationspuls 56 mit einem Low-Pulslevel 71 zugeordnet werden, während der Top-Fehler #2 dann dem dritten Informationspuls 56 mit einem Medium-Pulslevel 70 zugeordnet werden könnte.

Anhand der Bits #1 und #2 und damit des zweiten und dritten Informationspulses 54 und 56 lässt sich ein auftretender Fehler daher qualifizieren, also identifizieren. Der zweite und dritte Informationspuls 54 und 56 werden daher nachstehend auch als Fehlerqualifizierungsbereich 74 bezeichnet.

Demgegenüber könnten mit den Bits #5, #6 und #7 und damit der sechste, siebte und achte Informationspuls 62, 64 und 66 eine genauere Beschreibung der Fehlerursache für die beiden Top-Fehler #1 und #2 beschrieben werden, um den aufgetretenen Fehler beispielsweise hinsichtlich Größe, Zeitpunkt, Fehlerquelle, Fehlerursache, und so weiter zu quantifizieren. Daher werden der sechste, siebte und achte Informationspuls 62, 64 und 66 auch als Fehlerquantifizierungsbereich 76 bezeichnet.

Wenn im vorliegenden Ausführungsbeispiel das Bit #1="0" und damit der zweite Informationspuls 54 auf das Low-Pulslevel 71 gesetzt ist, was heißt, dass kein ASIL-relevanter TOP-Fehler vorliegt, kann anhand des Bits #2 und damit des dritten Informationspuls 56 in einen nicht ASIL-relevanten TOP-Fehler oder eine Warnung durch entsprechendes Setzen des Bit #2 auf 0 beziehungsweise 1 unterschieden werden. Der dritte Informationspuls 56 wird dabei entsprechend entweder auf ein Low-Pulslevel 71 beziehungsweise ein Medium-Pulslevel 70 gesetzt. Ein nicht ASIL-relevanter TOP-Fehler kann dabei ein weiterhin ASIL-relevanter Fehler oder ein nicht ASIL-relevanter Fehler sein. Diese Unterscheidung ermöglicht eine der Situation entsprechende Handlungseinleitung des Steuergeräts 18 für Geschwindigkeiten<300 km/h des Fahrzeuges 2. Die Bits #5, #6 und #7, und damit der sechste, siebte und achte Informationspuls 62, 64 und 66, definieren eine eindeutige Beschreibung des Fehler- bzw. Warnungsbildes. Als Beispiel für einen ASIL-relevanten Fehler, der jedoch kein ASIL-relevanter TOP-Fehler ist, sei der Fehler *"Der Informationsgehalt des Bits der Gültigkeit der Drehrichtung ist falsch"* angegeben, für einen nicht-ASIL-relevanten Fehler der Fehler *"Der Maximalwert des Luftspalts ist überschritten",* für eine Warnung die Warnung *"Die Versorgungsspannung des Sensor ist nahe der Abschaltschwelle".*

Der Vorteil der gezeigten Art der Kodierung ist eine Unterscheidbarkeit von ASIL-relevanten Top-Fehlern und ASIL-relevanten bzw. nicht-ASIL-relevanten Fehlern für Fahrzeuggeschwindigkeiten <375 km/h und eine Unterscheidbarkeit von Fehlern und Warnungen bzw. der beiden ASIL-relevanten Top-Fehler für Fahrzeuggeschwindigkeiten <300 km/h.

Die gesamte gezeigte Beschreibung einer Fehlerübertragung vom Raddrehzahlsensor 10 zum Steuergerät 18 ist konform der aktuellen Beschreibung und Definition des AK Protokolls.

Innerhalb des zeitlichen Abstandes 72 kann im Rahmen der zuvor beschriebenen Fehlerübertragung nur ein Fehler im Fehlerqualifizierungsbereich 74 und Fehlerquantifizierungsbereich 76 zwischen dem Drehzahlsensor 10 und dem Regler 18 übertragen werden. Treten jedoch mehrere Fehler gleichzeitig auf, so sollte aus diesen Fehlern ein zu übertragender Fehler ausgewählt werden. Als Auswahlkriterium kann dabei die Wertigkeit des Fehlers verwendet werden, indem beispielsweise der Fehler mit der höchsten Wertigkeit übertragen wird.

Wird kein Sensorfehler detektiert, erfolgt eine Übertragung des AK Protokolls gemäß der Definition in der obigen Tabelle. Im Fehlerfall wird Bit #0="1" gesetzt, was auch von Steuergeräten 18 älterer Bauart als anormaler Betriebszustand erkannt und bewertet wird. Somit ist eine Abwärtskompatibilität zu älteren Steuergeräten gegeben. Steuergeräten zukünftiger Bauart ermöglicht eine Auswertung der Fehlerkodierung, vorgegebene ASIL-Grade des Gesamtsystems zu erreichen.

## Patentansprüche

1. Verfahren zum Senden eines Messwertes (12, 50) in einem Datenübertragungssignal (40), umfassend:
- Eintragen des Messwertes (12, 50) in das Datenübertragungssignal (40),
- Eintragen einer Fehlerinformation (52) in das Datenübertragungssignal (40) nach dem Messwert (12, 50), aus der hervorgeht, ob der Messwert (12, 50) einen Fehler aufweist, und
- Eintragen einer die Fehlerinformation (52) beschreibenden Bewertungsinformation (54 bis 68) in das Datenübertragungssignal (40) nach der Fehlerinformation (52), wenn der Messwert (12, 50) den Fehler aufweist, wobei das Verfahren **dadurch gekennzeichnet ist, dass** die Bewertungsinformation (54 bis 68) einen Fehlerqualifizierungsbereich (74) und einen Fehlerquantifizierungsbereich (76) umfasst.

2. Verfahren nach Anspruch 1, wobei der Messwert (12, 50) als Puls (50) aus einem aktiven Drehzahlsensor (10) in das Datenübertragungssignal (40) eingetragen wird.

3. Verfahren nach Anspruch 1 oder 2, wobei der Fehlerqualifizierungsbereich (74) vor dem Fehlerquantifizierungsbereich (76) angeordnet wird.

4. Verfahren nach einem der Ansprüche 1 bis 3, wobei der Fehlerqualifizierungsbereich (74) wenigstens zwei Informationsabschnitte (54, 56) umfasst, von denen ein erster (54) der Informationsabschnitte (54, 56) eine erste Fehlerart und der zweite (56) der Informationsabschnitte (54, 56) eine zweite Fehlerart qualifizieren.

5. Verfahren nach Anspruch 4, wobei eine Reihenfolge der beiden Informationsabschnitte (54, 56) von einer Fehlerauswirkung der beiden Fehlerarten abhängig ist.

6. Verfahren nach einem der vorstehenden Ansprüche 1bis 5, wobei der Fehlerquantifizierungsbereich (76) Informationen zu einer Fehlerursache des Fehlers umfasst.

7. Verfahren nach einem der vorstehenden Ansprüche, wobei, wenn der Messwert (12, 50) keinen Fehler aufweist, in das Datenübertragungssignal (40) nach der Fehlerinformation (52) eine Zusatzinformation eingetragen wird, die einen den Messwert (12, 50) erfassenden Sensor (10) beschreibt.

8. Steuervorrichtung (38), die eingerichtet ist, ein Verfahren nach einem der vorstehenden Ansprüche durchzuführen.

9. Sensor (10), insbesondere Raddrehzahlsensor, der eine Steuervorrichtung (38) nach Anspruch 8 umfasst.

## Claims

1. Method for transmitting a measured value (12, 50) in a data transmission signal (40), comprising:
- inputting the measured value (12, 50) into the data transmission signal (40),
- inputting error information (52) into the data transmission signal (40) downstream of the measured value (12, 50), from which error information (52) it is apparent whether the measured value (12, 50) has an error, and
- inputting evaluation information (54 to 68), which describes the error information (52), in the data transmission signal (40) downstream of the error information (52) if the measured value (12, 50) has the error, wherein the method is **characterized in that** the evaluation information (54 to 68) comprises an error qualification range (74) and an error quantification range (76).

2. Method according to Claim 1, wherein the measured value (12, 50) is input as a pulse (50) from an active rotational speed sensor (10) into the data transmission signal (40).

3. Method according to Claim 1 or 2, wherein the error qualification range (74) is arranged upstream of the error quantification range (76).

4. Method according to one of Claims 1 to 3, wherein the error qualification range (74) comprises at least two information sections (54, 56), a first (54) of which information sections (54, 56) qualifies a first type of error, and the second (56) of which information sections (54, 56) qualifies a second type of error.

5. Method according to Claim 4, wherein a sequence of the two information sections (54, 56) is dependent on an error effect of the two types of error.

6. Method according to one of the preceding Claims 1 to 5, wherein the error quantification range (76) comprises information about a cause of the error.

7. Method according to one of the preceding claims, wherein when the measured value (12, 50) does not have an error, additional information which describes a sensor (10) which senses the measured value (12, 50) is input into the data transmission signal (40) downstream of the error information (52).

8. Control device (38) which is configured to carry out a method according to one of the preceding claims.

9. Sensor (10), in particular wheel speed sensor, which comprises a control device (38) according to Claim 8.

## Revendications

1. Procédé d'envoi d'une valeur mesurée (12, 50) dans un signal de transmission de données (40), comprenant :
- incorporation de la valeur mesurée (12, 50) dans le signal de transmission de données (40)
- incorporation d'une information d'erreur (52) dans le signal de transmission de données (40) après la valeur mesurée (12, 50), de laquelle il ressort si la valeur mesurée (12, 50) présente une erreur, et
- incorporation d'une information d'évaluation (54 à 68) qui décrit l'information d'erreur (52) dans le signal de transmission de données (40) après l'information d'erreur (52) lorsque la valeur mesurée (12, 50) présente l'erreur, le procédé étant **caractérisé en ce que** l'information d'évaluation (54 à 68) comprend une zone de qualification d'erreur (74) et une zone de quantification d'erreur (76).

2. Procédé selon la revendication 1, la valeur mesurée (12, 50) étant incorporée dans le signal de transmission de données (40) sous la forme d'une impulsion (50) provenant d'un capteur de vitesse de rotation (10) actif.

3. Procédé selon la revendication 1 ou 2, la zone de qualification d'erreur (74) étant disposée avant la zone de quantification d'erreur (76).

4. Procédé selon l'une des revendications 1 à 3, la zone de qualification d'erreur (74) comportant au moins deux portions d'information (54, 56) dont la première (54) des portions d'information (54, 56) qualifie un premier type d'erreur et la deuxième (56) des portions d'information (54, 56) un deuxième type d'erreur.

5. Procédé selon la revendication 4, un ordre des deux portions d'information (54, 56) étant dépendant d'un effet d'erreur des deux types d'erreur.

6. Procédé selon l'une des revendications précédentes 1 à 5, la zone de quantification d'erreur (76) comprenant des informations à propos d'une cause d'erreur de l'erreur.

7. Procédé selon l'une des revendications précédentes, selon lequel, lorsque la valeur mesurée (12, 50) ne présente aucune erreur, une information supplémentaire est incorporée dans le signal de transmission de données (40) après l'information d'erreur (52), laquelle décrit un capteur (10) qui acquiert la valeur mesurée (12, 50).

8. Dispositif de commande (38) qui est conçu pour mettre en œuvre un procédé selon l'une des revendications précédentes.

9. Capteur (10), notamment capteur de vitesse de rotation de roue, qui comprend un dispositif de commande (38) selon la revendication 8.
